# EUROPEAN PATENT APPLICATION

(11) **EP 0 902 196 A1**
(43) Date of publication of application: **17.03.1999**
(21) Application number: 98202860.7
(22) Date of filing: 26.08.1998
(51) Int. Cl.: F15B 15/14, F16B 21/18

(54) **Operating cylinder**

(30) Priority: 26.08.1997 NL 1006848
(71) Applicant: Kavee Hydraulics, 7051 GV Varsseveld (NL)
(72) Inventor: van Leuteren, Ronaldus Gerardus Elisabeth, 7051 HD Varsseveld (NL)
(74) Representative: Smulders, Theodorus A.H.J., Ir.

(57) **Abstract**

An operating cylinder comprises a cylinder tube having internal screw thread, a cylinder head having external screw thread and means for locking the cylinder head relative to the cylinder tube. The locking means are formed by an O-ring (3) which, when the cylinder head (2) has been screwed into the cylinder tube (1), is located partly in an annular groove (C) provided on the outside of the cylinder head (2) and partly in an annular groove (A) provided on the inside of the cylinder tube (1).

## Description

The present invention relates to an operating cylinder comprising a cylinder tube having internal screw thread, a cylinder head having external screw thread and means for locking the cylinder head relative to the cylinder tube.

For locking a cylinder head screwed into a cylinder tube, different possibilities have been tested in practice, utilizing gluing techniques, locking pins, self-locking bolts, etc. However, this involves problems during disassembly of the cylinder head; the locking is usually so strong that it is difficult, if not impossible, to get loose mechanically. Also, problems may occur in obtaining a locking of a constant quality or the locking leads to a weakening of the cylinder construction itself.

The object of the invention is to provide a locking of the cylinder head relative to the cylinder tube in which these drawbacks hardly occur, if at all.

To that end, in accordance with the invention, the operating cylinder as described in the preamble is characterized in that the locking means are formed by an O-ring which, when the cylinder head has been screwed into the cylinder tube, is located partly in an annular groove provided on the outside of the cylinder head and partly in an annular groove provided on the inside of the cylinder tube.

By means of these locking means, a locking is obtained which offers an adequate protection against loosening of the cylinder head caused by vibration and radial, rotating loads between the cylinder head and the cylinder tube. Also, the cylinder head can properly be disassembled mechanically.

Relative to the screw threads, the O-ring is located adjacent the end of the cylinder. In this manner, the O-ring provides protection to these screw threads which, relative to the outside air, are in rearward position, and sticking through oxidation and corrosion is prevented, which in turn adds to the easier disassembly of the cylinder head.

As will be explained in more detail hereinbelow, a shortcoming of a locking by means of the locking means mentioned here may be the occurrence of an idle turn of the cylinder head in the cylinder tube before the locking comes into action when the cylinder head is being screwed from the cylinder tube. To prevent this as much as possible, the radius of the grooves is constructed such that it continues so far on the side of the screw threads that when metric screw threads are used, the maximum angle of inclination for the run-out of the grooves is 60°. This clearance, causing the idle turn between the end of the screw threads and the grooves, can thus be kept minimal, as a result of which the idle turn of the cylinder head in the cylinder tube can be minimized.

Both for assembling reasons, in particular the prevention of damage to the O-ring for the cylinder sealing, and for forming a guide for the O-ring for the cylinder locking when this O-ring is being pressed into the cylinder tube, the end of the cylinder tube which directly connects to the groove on the inside of the cylinder tube is formed by an outwardly tapering bevel.

It is also favorable when, for forming a guide for the O-ring when the O-ring is being pressed into the cylinder tube, the cylinder head is provided, at a location directly connecting to the groove on the outside thereof, with an outwardly tapering bevel, which bevel, when the cylinder head has been screwed into the cylinder tube, does not touch the bevel at the end of the cylinder tube and preferably extends parallel to said bevel.

In a particular embodiment, when the cylinder head has been screwed into the cylinder tube, the bevels are located at a distance from each other, while the gap formed between these bevels can be filled with a layer of adhesive. Accordingly, the O-ring forms, during gluing, a mechanical barrier which protects the screw threads against gluing, which prevents the occurrence of too strong a locking which complicates the disassembly.

The invention will now be specified with reference to the accompanying drawings, in which:
Fig. 1 schematically shows an operating cylinder with the locking means according to the invention;
Fig. 2 shows a detail of the cylinder tube;
Fig. 3 shows a detail of the relevant end of the cylinder head;
Fig. 4 shows a detail of the cylinder tube and the cylinder head in a partially screwed-in situation;
Fig. 5 shows a detail of the cylinder tube and the cylinder head just before the moment when the effective locking is realized;
Fig. 6 shows a detail of the cylinder tube and the cylinder head in the completely mounted situation;
Fig. 7 shows a detail of the cylinder tube and the cylinder head at the beginning of the disassembly; and
Fig. 8 shows a further detail of the locking means.

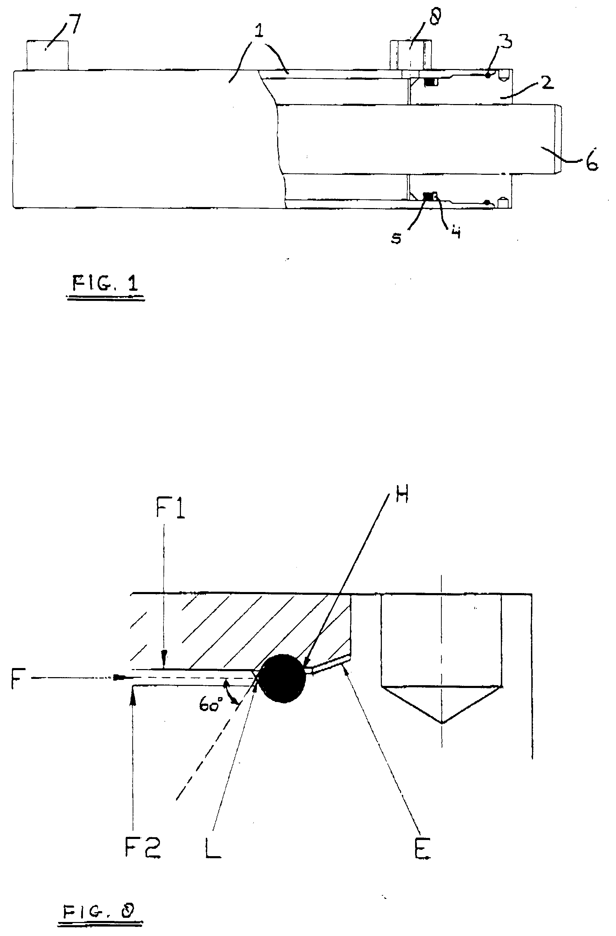

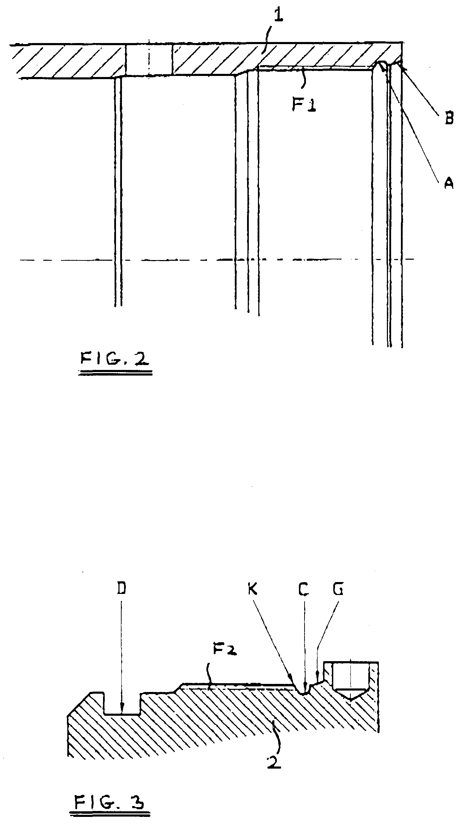

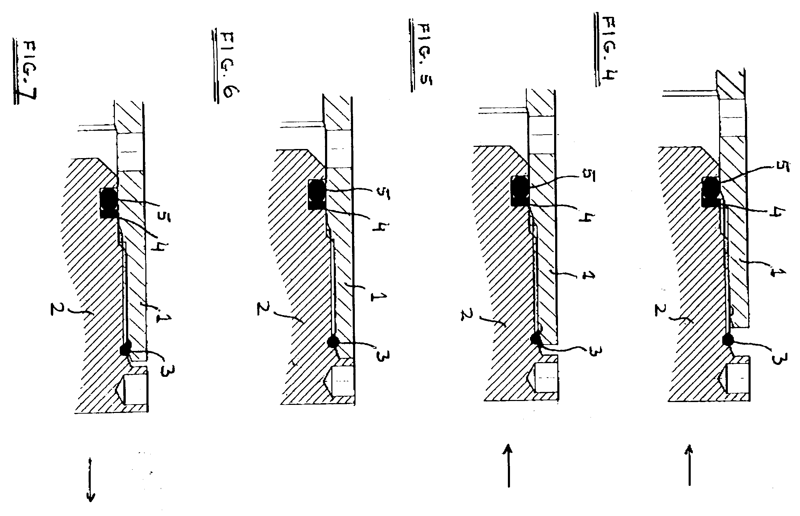

Fig. 1 schematically shows an operating cylinder comprising a cylinder tube 1 having internal screw thread F1, closed off by a cylinder head or head nut 2 having internal screw thread F2 (see also Fig. 8). Located between the cylinder tube 1 and the cylinder head 2 is an O-ring 3 which provides the locking action of the cylinder head 2 relative to the cylinder tube 1. Further, located between the cylinder tube 1 and the cylinder head 2, in a groove D provided in the cylinder head 2 (see Fig. 3), is a second O-ring 5 forming the seal between the internal portion of the cylinder and the outside world, and a back-up ring 4 protecting the O-ring 5 from being pressed out at a high internal pressure in the cylinder. The cylinder further comprises, in the known manner, a piston with piston rod 6 and, in the case of a double-acting cylinder, an inlet and an outlet 7, 8 for the fluid by means of which the piston is reciprocable within the cylinder tube. In a single-acting cylinder, one of the two passages 7 or 8 is absent. As the invention is directed to the locking of the cylinder head 2 relative to the cylinder tube 1, the description of the cylinder will further be limited to the locking means and the manner in which the locking takes place. Figs. 2-8 provide the details therefor.

The locking means are formed by the non-compressible, yet flexible O-ring 3, preferably made of rubber, which, when the cylinder head 2 has been screwed into the cylinder tube 1, is located partly in an annular groove C provided on the outside of the cylinder head 2 and partly in an annular groove A provided on the inside of the cylinder tube 1, adjacent the end of the cylinder relative to the screw threads F1 and F2. 'Non-compressible' is understood to mean that the volume of the O-ring cannot be reduced by pressing the O-ring together. The end of the cylinder tube 1 directly connecting to the groove A is formed by an outwardly tapering bevel B. Likewise, the end of the cylinder head 2, at a location directly connecting to the groove C, is provided with an outwardly tapering bevel G. In the preferred embodiment here shown, the bevel G, when the cylinder head 2 has been screwed into the cylinder tube 1, extends parallel to the bevel B. In the completely mounted condition, the bevels B and G are located at a distance from each other and form a gap E, which may be filled up with a layer of adhesive, if so desired.

Fig. 4 shows the first phase of screwing the cylinder head 2 into the cylinder tube 1. The O-ring 3 is disposed in the groove C and the cylinder head 2 has already been screwed into the cylinder tube 1 for the larger part. Fig. 5 shows that when the cylinder head 2 is screwed in further, the O-ring 3 is pressed through the gap E. This happens because the internal screw thread F1 and the external screw thread F2, together with the rotary movement between the cylinder tube 1 and cylinder head 2 relative to each other provide a linear displacement in axial direction. As the rubber of the O-ring 3 is not compressible, the O-ring 3 is pressed into the chamber which is formed from the grooves A and C when the cylinder head 2 is being screwed into the cylinder tube 1. The groove C is constructed such that the O-ring does not slip from the groove C at the moment when the highest tensile stress occurs. The tensile stress in the O-ring 3 is highest just before the moment when the chamber to be formed by the grooves A and C becomes maximal. Fig. 6 shows the situation in which the maximum spatial configuration of the chamber formed by the grooves A and C has been reached. The O-ring 3 has resumed its original shape. If the cylinder head 2 is at rest, so when no rotary movements of the cylinder head 2 relative to the cylinder tube 1 around the longitudinal axis of the cylinder occur, the O-ring has solely a sealing function. As a result, behind the O-ring 3, the flank center line F, formed by the two flanks of the screw threads F1 and F2, between the screw threads F1 and F2, is protected against corrosion and oxidation that may be caused by the action of gases, dust or liquids from outside. This does not only provide that the construction is protected, but also that the flank center line will not stick due to an oxidation or corrosion. In this manner, the construction of the O-ring 3 adds to an effective locking which can be released again mechanically. This locking is in inward as well as outward direction of the cylinder head relative to the cylinder tube.

Fig. 7 shows the cylinder tube 1, the cylinder head 2 and the locking O-ring 3 during disassembly. Through the proper choice of the angle of inclination and the radius of the grooves A and C, the O-ring 3 is outwardly fixedly pressed into the groove A. Consequently, the O-ring 3 is not pressed through the gap E, but confines itself in the chamber formed by the grooves A and C, which chamber now becomes smaller. During the outward movement of the cylinder head 2, the O-ring 3 will undergo a slight anti-clockwise rotary movement, but will yet remain fixedly pressed in the groove A. This is caused by the wall of groove A on the side of the bevel B, which wall is almost 90°. Thus, the O-ring 3 is confined between the slot E and the contact area formed by the screw threads F1 and F2. Apart from the idle turn caused by the processing tolerances of the grooves A and C and the dimensions of the O-ring 3, the O-ring 3 must hence first move against the surface of the chamber formed by the grooves A and C and the cylinder head 2 can hence not be axially displaced straight-away.

Upon a sufficiently great rotating, radial force exerted on the cylinder head 2 relative to the cylinder tube 1 (or the other way round), the O-ring 3 will be pressed outwards so as to be more and more fixed in the chamber formed by the grooves A and C, which chamber becomes increasingly smaller. Because for an outward displacement of the cylinder head 2, the O-ring 3 must be deformed, this results in a resistance or locking action. Upon a further exertion of force, the O-ring 3 will be pressed with difficulty through the opening between the edges H and K. The greatest locking effect is created at the moment when the O-ring 3 must be pressed between the edges H and K which almost touch each other. The pointed design of the edges H and K causes the O-ring 3 to be cut through between the edges H and K. The rotary, radial force must become so great that in addition to the deformation of the O-ring 3, it can also produce the power to cut through the O-ring 3 by means of the edges H and K.

A shortcoming of the locking is the idle turn of the cylinder head 2 in the cylinder tube 1 before the locking comes into action. Hence, it is important that this turn, caused by the clearance L (see Fig. 8), be reduced to a minimum. This can be realized by causing the radius of the grooves A and C on the inside of the cylinder to continue as far as possible. However, this is not possible because of burr formation on the screw threads F1 and F2. When a metric screw thread is used, the maximum angle of inclination that can be used for the run-out of the grooves A and C is 60°.

The invention is not limited to the exemplary embodiment described in the foregoing, but comprises various modifications thereto in so far as they fall within the scope of the following claims.

## Claims

1. An operating cylinder comprising a cylinder tube having internal screw thread, a cylinder head having external screw thread and means for locking the cylinder head relative to the cylinder tube, **characterized in that** the locking means are formed by an O-ring (3) which, when the cylinder head (2) has been screwed into the cylinder tube (1), is located partly in an annular groove (C) provided on the outside of the cylinder head (2) and partly in an annular groove (A) provided on the inside of the cylinder tube (1).

2. An operating cylinder according to claim 1, characterized in that relative to the screw threads (F1 and F2), the O-ring (3) is located adjacent the end of the cylinder.

3. An operating cylinder according to claim 2, characterized in that the radius of the grooves (A and C) continues as far as possible on the side of the screw threads so as to minimize the idle turn, while, when metric screw threads (F1 and F2) are used, the maximum angle of inclination for the run-out of the grooves (A and C) is 60°.

4. An operating cylinder according to any one of the preceding claims, characterized in that the end of the cylinder tube (1) which directly connects to the groove (A) on the inside of the cylinder tube (1) is formed by an outwardly tapering bevel (B).

5. An operating cylinder according to claim 4, characterized in that the cylinder head (2), at a location directly connecting to the groove (C) on the outside thereof, is provided with an outwardly tapering bevel (G), which bevel, when the cylinder head (2) has been screwed into the cylinder tube (1), does not touch the bevel (B) at the end of the cylinder tube (1) and preferably extends parallel to said bevel (B).

6. An operating cylinder according to claim 5, characterized in that when the cylinder head (2) has been screwed into the cylinder tube (1), the bevels (B) and (G) are located at a distance from each other, while the gap (E) formed between said bevels (B) and (G) can be filled with a layer of adhesive.
